# EUROPÄISCHE PATENTSCHRIFT

(11) **EP 3 516 221 B1**
(45) Veröffentlichungstag und Bekanntmachung des Hinweises auf die Patenterteilung: **20.04.2022**
(21) Anmeldenummer: 17772018.2
(22) Anmeldetag: 19.09.2017
(51) Int. Cl.: F04C 18/16, F04C 29/00

(54) **SCHRAUBENKOMPRESSORSYSTEM FÜR EIN NUTZFAHRZEUG**
SCREW COMPRESSOR SYSTEM FOR A UTILITY VEHICLE
SYSTÈME DE COMPRESSEUR À VIS POUR VÉHICULE UTILITAIRE

(30) Priorität: 21.09.2016 DE 102016011433
(43) Veröffentlichungstag der Anmeldung: 31.07.2019
(73) Patentinhaber: KNORR-BREMSE Systeme für Nutzfahrzeuge GmbH, 80809 München (DE)
(72) Erfinder: HEBRARD, Gilles, 80809 München (DE); MARESCOT, Jean-Baptiste, 80809 München (DE); MELLAR, Jörg, 80809 München (DE); WEINHOLD, Thomas, 80809 München (DE)
(86) Internationale Anmeldenummer: PCT/EP2017/073543
(87) Internationale Veröffentlichungsnummer: WO 2018/054860

(56) Entgegenhaltungen:
- EP-A1- 0 736 692
- EP-A2- 2 442 051
- DE-A1- 10 101 016
- DE-A1-102004 055 360
- DE-A1-102004 061 071
- DE-A1-102005 052 096
- DE-A1-102014 212 145

## Beschreibung

Die vorliegende Erfindung betrifft ein Schraubenkompressorsystem für ein Nutzfahrzeug mit wenigstens einem Schraubenkompressor, wenigstens einem Schraubenkompressorantrieb mit einer Abtriebswelle und mit wenigstens einer angetriebenen Schraube.

Aus dem Stand der Technik sind bereits Schraubenkompressoren für Nutzfahrzeuge bekannt. Derartige Schraubenkompressoren werden verwendet, um die notwendige Druckluft für beispielsweise das Bremssystem des Nutzfahrzeugs bereitzustellen.

Im Zusammenhang mit einem Kühlschrank lehrt die EP 2 442 051 A2 eine Schraubenkompressoranordnung bestehend aus zwei Schraubenkompressorpaaren, die über entsprechende Wellen miteinander gekoppelt sind.

Aus der DE 10 2004 055 360 A1 ist eine Motorverdichteranordnung mit einem Schraubenverdichter für Druckluft und einem elektrischen Motor zum Antrieb des Verdichters bekannt, wobei ein Läufer des Verdichters über eine Welle mit dem Rotor des Motors getriebefrei direkt gekoppelt ist. Dabei wird vorgeschlagen, dass der Motor und der Verdichter an einer Trennstelle voneinander lösbar sind, wobei die Welle zwischen zwei zwischen Läufer und Motor trennende Teile aufweist.

Die DE 101 01 016 A1 betrifft einen Kältemittelverdichter, umfassend ein Gesamtgehäuse, einen in einem Gesamtgehäuse angeordneten Elektromotor mit einem Starter und einem auf einer Antriebswelle sitzenden Rotor, ein in dem Gesamtgehäuse angeordneten Schraubenverdichter, dessen eine Verdichterschraube auf der Antriebswelle sitzt, die durch ein erstes Radiallager zwischen dem Rotor und der Verdichterschraube und ein zweites, auf einer dem Radiallager gegenüberliegenden Seite der Verdichterschraube angeordnetes Radiallager in dem Gesamtgehäuse drehbar gelagert ist. Die Antriebswelle ist in dem Gesamtgehäuse durch ein drittes Radiallager gelagert, welches auf einer dem ersten Radiallager gegenüberliegenden Seite des Rotors angeordnet ist.

Ferner ist aus der DE 10 2004 061 071 A1 ein Kältemittelverdichter bekannt.

In diesem Zusammenhang sind insbesondere Öl befüllte Kompressoren, insbesondere auch Schraubenkompressoren bekannt, bei denen sich als Aufgabe stellt, die Öltemperatur zu regulieren. Dies wird in der Regel dadurch bewerkstelligt, dass ein externer Ölkühler vorhanden ist, der mit dem Öl befüllten Kompressor und dem Ölkreislauf über ein Thermostatventil verbunden ist. Der Ölkühler ist dabei ein Wärmetauscher, der zwei voneinander getrennte Kreisläufe aufweist, wobei der erste Kreislauf für die heiße Flüssigkeit, also das Kompressoröl, vorgesehen ist und der zweite für die Kühlflüssigkeit. Als Kühlflüssigkeit können beispielsweise Luft, Wassergemische mit einem Frostschutzmittel oder einem anderen Öl verwendet werden.

Dieser Ölkühler muss sodann mit dem Kompressorölkreislauf über Rohre oder Schläuche verbunden werden und der Ölkreislauf muss gegen Leckagen gesichert werden.

Dieses externe Volumen muss des Weiteren mit Öl befüllt werden, so dass auch die Gesamtmenge an Öl vergrößert wird. Dadurch wird die Systemträgheit vergrößert. Darüber hinaus muss der Ölkühler mechanisch untergebracht und befestigt werden, entweder durch umliegend befindliche Halterungen oder durch eine gesonderte Halterung, was zusätzliche Bestigungsmittel, aber auch Bauraum benötigt.

Es ist die Aufgabe der vorliegenden Erfindung, ein Schraubenkompressorsystem für ein Nutzfahrzeug der eingangs genannten Art in vorteilhafter Weise weiterzubilden, insbesondere dahingehend, dass die Lagerung der Schrauben des Schraubenkompressors vereinfacht und kostengünstiger gestaltet werden kann und dass der Schraubenkompressor kleiner bauend ausgebildet werden kann.

Diese Aufgabe wird erfindungsgemäß gelöst durch ein Schraubenkompressorsystem für ein Nutzfahrzeug mit den Merkmalen des Anspruchs 1. Danach ist vorgesehen, dass ein Schraubenkompressorsystem für ein Nutzfahrzeug mit wenigstens einem Schraubenkompressor, wenigstens einem Schraubenkompressorantrieb mit einer Abtriebswelle, wenigstens einer angetriebene Schraube mit einem Schraubenantriebswellenabschnitt versehen ist, wobei die Abtriebswelle und der Schraubenantriebswellenabschnitt im Wesentlichen ko-axial sind.

Die Erfindung basiert auf dem Grundgedanken, durch eine ko-axiale Drehmomentübertragung zwischen Schraubenkompressorantrieb und der angetriebenen Schraube die auftretenden Radialkräfte und radialen Momente deutlich zu verringern, so dass im Wesentlichen neben dem Antriebsmoment deutlich geringere Radialkräfte auftreten im Vergleich zu beispielsweise mit Zahnradstufen oder Riementrieben angetriebenen Schrauben eines Schraubenkompressors. Dadurch wird es möglich, kleinere Lager einzusetzen und diese auch für kleinere auftretende Kräfte und Momente auslegen zu können.

Durch den Einsatz vergleichsweise kleinerer Lager wird es auch möglich, den Schraubenkompressor kleiner und kompakter bauen zu können. Auch die Fertigung der Lagersitze im Gehäuse des Schraubenkompressors wird hierdurch vereinfacht. Dadurch wird es möglich, die Fertigungskosten des Schraubenkompressors deutlich zu verringern. Durch kleiner bauende Lager wird zudem die Toleranzkette kürzer und insgesamt eine höhere Genauigkeit in der Fertigung und Montage erreicht.

Ferner ist zwischen der Abtriebswelle und dem Schraubenantriebswellenabschnitt eine Ausgleichskupplung vorgesehen. Durch die Ausgleichskupplung können die auftretenden Radialkräfte reduziert werden. Darüber hinaus kann auch ein leichter Versatz zwischen der Abtriebswelle und dem Schraubenantriebswellenabschnitt ausgeglichen werden. Hierdurch wird es möglich, ebenfalls die Toleranzkette zu verkürzen und auch die Montage zu verbessern. Auch eine Verschleißreduzierung kann hierdurch erreicht werden.

Der Schraubenantriebswellenabschnitt weist einen ersten Lagerabschnitt auf. An diesem Lagerabschnitt kann eine Lagerung der Schraube vorgenommen werden. Hierdurch wird eine belastungsgerechte Lagerung der angetriebenen Schraube auch ermöglicht.

In dem ersten Lagerabschnitt ist ein Radiallager angeordnet. Hier ist es erfahrungsgemäß nicht notwendig, Axialkräfte aufzunehmen, so dass die Anordnung eines Radiallagers ausreichend ist. Dadurch kann der für das Lager benötigte Bauraum an dieser Stelle kleiner gewählt werden und auch mit kleineren Durchmessern ein Lagersitz im Gehäuse vorgesehen werden. Dies erleichtert es ebenfalls, die Toleranzkette zu verkürzen und höhere Genauigkeiten zu erzielen.

Das Radiallager kann als Nadellager ausgebildet sein. Durch die Anordnung als Nadellager wird eine kostengünstige und gleichzeitig belastungsgerechte Lagerart gewählt.

Das Radiallager weist keinen Innenring auf. Dadurch wird erreicht, dass insgesamt der Außendurchmesser des Lagers geringer gewählt werden kann.

In diesem Zusammenhang kann insbesondere vorgesehen sein, dass die Wälzelemente des Radiallagers direkt auf der Oberfläche des ersten Lagerabschnitts laufen.

Der erste Lagerabschnitt kann dabei entsprechend gehärtet und als Lagersitz ausgebildet sein. Durch den direkten Wälzkontakt der Wälzelemente mit der Oberfläche des ersten Lagerabschnitts wird es möglich, insgesamt kleiner bauen zu können und auch kostengünstiger herzustellen. Durch den Wegfall des Innenrings des Radiallagers werden insgesamt kleinere Durchmesser für die Lager benötigt.

Des Weiteren kann vorgesehen sein, dass die angetriebene Schraube neben dem Schraubenantriebswellenabschnitt weiter einen Schraubenabschnitt und einen zweiten Lagerabschnitt aufweist, wobei der Schraubenabschnitt zwischen dem Schraubenantriebswellenabschnitt und dem zweiten Lagerabschnitt befindlich ist. Somit wird der Schraubenabschnitt zwischen dem Schraubenantriebswellenabschnitt und dem zweiten Lagerabschnitt angeordnet und die Schraube wird somit an beiden Enden gelagert.

In diesem Zusammenhang kann insbesondere vorgesehen sein, dass der Schraubenantriebswellenabschnitt einen Lagersitz auf der dem Schraubenabschnitt zugewandten Seite aufweist und auf der dem Schraubenabschnitt abgewandten Seite den Ansatz für die Ausgleichskupplung aufweist.

Am zweiten Lagerabschnitt kann ein Lager zur Aufnahme axialer und radialer Kräfte angeordnet sein. Durch diese Lageranordnung wird es möglich, die auftretenden Belastungen der Lager sinnvoll und zweckmäßig aufzunehmen. Die hier möglicherweise erforderlichen größeren Abmessungen des Lagers sind an dieser Stelle auch einfacher im Gehäuse unterzubringen.

Darüber hinaus kann vorgesehen sein, dass die mit der angetriebenen Schraube kämmende Schraube eine im Wesentlichen identische Lageranordnung wie die angetriebene Schraube aufweist.

Hierdurch wird die Fertigung vereinfacht. Darüber hinaus können identische Werkzeuge für die Ausbildung der Lagersitze im Gehäuse verwendet werden. So können die Umrüstzeiten bei der Herstellung verringert werden.

Weitere Einzelheiten und Vorteile der Erfindung sollen nun anhand eines in den Zeichnungen dargestellten Ausführungsbeispiels näher erläutert werden.

Es zeigen:
- Fig. 1: eine schematische Schnittzeichnung durch einen erfindungsgemäßen Schraubenkompressor; und
- Fig. 2: eine perspektivische Draufsicht auf die Schrauben des Schraubenkompressors mit entsprechender Lageranordnung und Ausgleichskupplung.

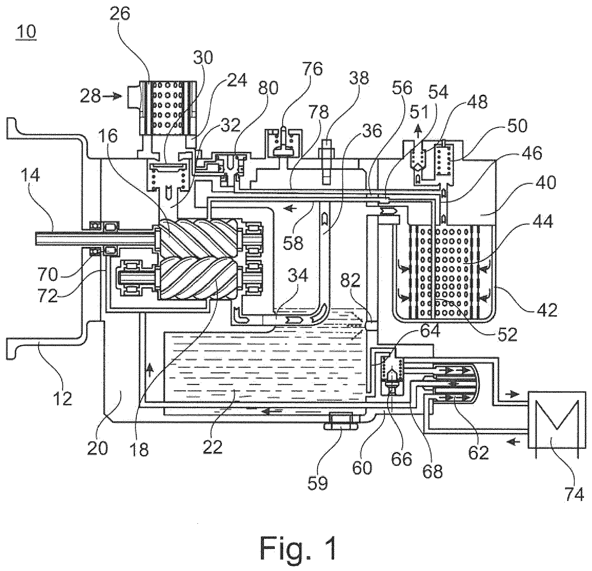

**Fig.** 1 zeigt in einer schematischen Schnittdarstellung einen Schraubenkompressor 10 im Sinne eines Ausführungsbeispiels für die vorliegende Erfindung.

Der Schraubenkompressor 10 weist einen Befestigungsflansch 12 zur mechanischen Befestigung des Schraubenkompressors 10 an einem hier nicht näher gezeigten Elektromotor auf.

Gezeigt ist jedoch die Eingangswelle 14, über die das Drehmoment vom Elektromotor auf eine der beiden Schrauben 16 und 18, nämlich die Schraube 16 übertragen wird.

Die Schraube 18 kämmt mit der Schraube 16 und wird über diese angetrieben.

Der Schraubenkompressor 10 weist ein Gehäuse 20 auf, in dem die wesentlichen Komponenten des Schraubenkompressors 10 untergebracht sind.

Das Gehäuse 20 ist mit Öl 22 befüllt.

Lufteingangsseitig ist am Gehäuse 20 des Schraubenkompressors 10 ein Einlassstutzen 24 vorgesehen. Der Einlassstutzen 24 ist dabei derart ausgebildet, dass an ihm ein Luftfilter 26 angeordnet ist. Außerdem ist radial am Lufteinlassstutzen 24 ein Lufteinlass 28 vorgesehen.

Im Bereich zwischen Einlassstutzen 24 und der Stelle, an dem der Einlassstutzen 24 am Gehäuse 20 ansetzt, ist ein federbelasteter Ventileinsatz 30 vorgesehen, hier als Axialdichtung ausgeführt.

Dieser Ventileinsatz 30 dient als Rückschlagventil.

Stromabwärts des Ventileinsatzes 30 ist ein Luftzuführkanal 32 vorgesehen, der die Luft den beiden Schrauben 16, 18 zuführt.

Ausgangsseitig der beiden Schrauben 16, 18 ist ein Luftauslassrohr 34 mit einer Steigleitung 36 vorgesehen.

Im Bereich des Endes der Steigleitung 36 ist ein Temperaturfühler 38 vorgesehen, mittels dessen die Öltemperatur überwachbar ist.

Weiter vorgesehen ist im Luftauslassbereich ein Halter 40 für ein Luftentölelement 42.

Der Halter 40 für das Luftentölelement weist im montierten Zustand im dem Boden zugewandten Bereich (wie auch in Fig. 1 gezeigt) das Luftentölelement 42 auf.

Weiter vorgesehen ist im Inneren der Luftentölelement 42 ein entsprechendes Filtersieb bzw. bekannte Filter- und Ölabscheidevorrichtungen 44, die nicht näher im Einzelnen spezifiziert werden.

Im zentralen oberen Bereich, bezogen auf den montierten und betriebsfertigen Zustand (also wie in Fig. 1 gezeigt), weist der Halter für das Luftentölelement 40 eine Luftausgangsöffnung 46 auf, die zu einem Rückschlagventil 48 und einem Mindestdruckventil 50 führen. Das Rückschlagventil 48 und das Mindestdruckventil 50 können auch in einem gemeinsamen, kombinierten Ventil ausgebildet sein.

Nachfolgend des Rückschlagventils 48 ist der Luftauslass 51 vorgesehen.

Der Luftauslass 51 ist mit entsprechend bekannten Druckluftverbrauchern in der Regel verbunden.

Um das im Luftentölelement 42 befindliche und abgeschiedene Öl 22 wieder in das Gehäuse 20 zurückzuführen, ist eine Steigleitung 52 vorgesehen, die ausgangs des Halters 40 für das Luftentölelement 42 beim Übertritt in das Gehäuse 20 ein Filter- und Rückschlagventil 54 aufweist.

Stromabwärts des Filter- und Rückschlagventils 54 ist in einer Gehäusebohrung eine Düse 56 vorgesehen. Die Ölrückführleitung 58 führt zurück in etwa den mittleren Bereich der Schraube 16 oder der Schraube 18, um dieser wieder Öl 22 zuzuführen.

Im im montierten Zustand befindlichen Bodenbereich des Gehäuses 20 ist eine Ölablassschraube 59 vorgesehen. Über die Ölablassschraube 59 kann eine entsprechende Ölablauföffnung geöffnet werden, über die das Öl 22 abgelassen werden kann.

Im unteren Bereich des Gehäuses 20 ist auch der Ansatz 60 vorhanden, an dem der ölfilter 62 befestigt wird. Über einen Ölfiltereinlasskanal 64, der im Gehäuse 20 angeordnet ist, wird das Öl 22 zunächst zu einem Thermostatventil 66 geleitet.

Anstelle des Thermostatventils 66 kann eine Steuerungs- und/oder Regelungseinrichtung vorgesehen sein, mittels derer die Öltemperatur des im Gehäuse 20 befindlichen Öls 22 überwachbar und auf einen Sollwert einstellbar ist.

Stromabwärts des Thermostatventils 66 ist sodann der Öleinlass des Ölfilters 62, der über eine zentrale Rückführleitung 68 das Öl 22 wieder zurück zur Schraube 18 oder zur Schraube 16, aber auch zum ölgeschmierten Lager 70 der Welle 14 führt. Im Bereich des Lagers 70 ist auch eine Düse 72 vorgesehen, die im Gehäuse 20 im Zusammenhang mit der Rückführleitung 68 vorgesehen ist.

Der Kühler 74 ist am Ansatz 60 angeschlossen.

Im oberen Bereich des Gehäuses 20 (bezogen auf den montierten Zustand) befindet sich ein Sicherheitsventil 76, über das ein zu großer Druck im Gehäuse 20 abgebaut werden kann.

Vor dem Mindestdruckventil 50 befindet sich eine Bypassleitung 78, die zu einem Entlastungsventil 80 führt. Über dieses Entlastungsventil 80 das mittels einer Verbindung mit der Luftzuführung 32 angesteuert wird kann Luft in den Bereich des Lufteinlasses 28 zurückgeführt werden. In diesem Bereich kann ein nicht näher gezeigtes Entlüftungsventil und auch eine Düse (Durchmesserveringerung der zuführenden Leitung) vorgesehen sein.

Darüber hinaus kann ungefähr auf Höhe der Leitung 34 in der Außenwand des Gehäuses 20 ein Öllevelsensor 82 vorgesehen sein. Dieser Öllevelsensor 82 kann beispielsweise ein optischer Sensor sein und derart beschaffen und eingerichtet, dass anhand des Sensorsignals erkannt werden kann, ob der Ölstand im Betrieb oberhalb des Öllevelsensors 82 ist oder ob der Öllevelsensor 82 frei liegt und hierdurch der Ölstand entsprechend gefallen ist.

Im Zusammenhang mit dieser Überwachung kann auch eine Alarmeinheit vorgesehen sein, die eine entsprechende Fehlermeldung oder Warnmeldung an den Nutzer des Systems ausgibt bzw. weiterleitet.

Die Funktion des in Fig. 1 gezeigten Schraubenkompressors 10 ist dabei wie folgt:
Luft wird über den Lufteinlass 28 zugeführt und gelangt über das Rückschlagventil 30 zu den Schrauben 16, 18, wo die Luft komprimiert wird. Das komprimierte Luft-Öl-Gemisch, das mit einem Faktor zwischen 5- bis 16facher Komprimierung nach den Schrauben 16 und 18 durch die Auslassleitung 34 über das Steigrohr 36 aufsteigt, wird direkt auf den Temperaturfühler 38 geblasen.

Die Luft, die noch teilweise Ölpartikel trägt, wird sodann über den Halter 40 in das Luftentölelement 42 geführt und gelangt, sofern der entsprechende Mindestdruck erreicht wird, in die Luftauslassleitung 51.

Das im Gehäuse 20 befindliche Öl 22 wird über den Ölfilter 62 und ggf. über den Wärmetauscher 74 auf Betriebstemperatur gehalten.

Sofern keine Kühlung notwendig ist, wird der Wärmetauscher 74 nicht verwendet und ist auch nicht zugeschaltet.

Die entsprechende Zuschaltung erfolgt über das Thermostatventil 68. Nach der Aufreinigung im Ölfilter 64 wird über die Leitung 68 Öl der Schraube 18 oder der Schraube 16, aber auch dem Lager 72 zugeführt. Die Schraube 16 oder die Schraube 18 wird über die Rückführleitung 52, 58 mit Öl 22 versorgt, hier erfolgt die Aufreinigung des Öls 22 im Luftentölelement 42.

Über den nicht näher gezeigten Elektromotor, der sein Drehmoment über die Welle 14 auf die Schraube 16 überträgt, die wiederum mit der Welle 18 kämmt, werden die Schrauben 16 und 18 des Schraubenkompressors 10 angetrieben.

Über das nicht näher gezeigte Entlastungsventil 80 wird sichergestellt, dass im Bereich der Zuleitung 32 nicht der hohe Druck, der im Betriebszustand beispielsweise ausgangsseitig der Schrauben 16, 18 herrscht, eingesperrt werden kann, sondern dass insbesondere beim Anlaufen des Kompressors im Bereich der Zuleitung 32 stets ein niedriger Eingangsdruck, insbesondere Atmosphärendruck, besteht. Andernfalls würde mit einem Anlaufen des Kompressors zunächst ein sehr hoher Druck ausgangsseitig der Schrauben 16 und 18 entstehen, der den Antriebsmotor überlasten würde.

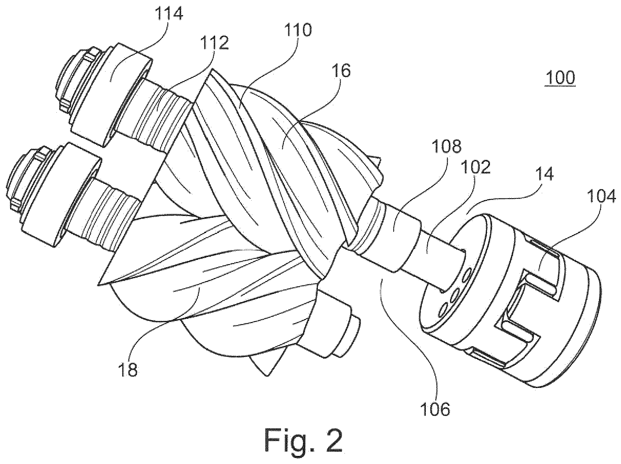

**Fig. 2** zeigt in perspektivischer Ansicht die angetriebene Schraube 16 und die mit der angetriebenen Schraube kämmende Schraube 18 des Schraubenkompressorsystems 100 für ein Nutzfahrzeug. Das Schraubenkompressorsystem 100 für ein Nutzfahrzeug weist einen Schraubenkompressor 10 wie in Fig. 1 gezeigt sowie einen nicht näher dargestellten Elektromotor als Antrieb auf.

Die Eingangswelle 14 entspricht im Wesentlichen dem Schraubenantriebswellenabschnitt der Schraube 16 und weist einen Schraubenantriebswellenabschnitt 102 auf.

Der Schraubenantriebswellenabschnitt 102 und die nicht näher gezeigte Abtriebswelle des Schraubenkompressorantriebs, hier beispielsweise ein Elektromotor, sind ko-axial zueinander.

Dies ist in Fig. 2 dadurch ersichtlich, dass die Ausgleichskupplung 104 gezeigt wird.

Die Ausgleichskupplung 104 sitzt auf der Spitze des Schraubenantriebswellenabschnitts 102 und auch auf der Spitze der Abtriebswelle des Schraubenkompressorantriebs .

Der Schraubenantriebswellenabschnitt 102 weist weiter einen ersten Lagerabschnitt 106 auf, der den identischen Durchmesser wie der gesamte Schraubenantriebswellenabschnitt 102 aufweist. An dieser Stelle ist jedoch der Schraubenantriebswellenabschnitt 102 gehärtet, da der erste Lagerabschnitt 106 dafür vorgesehen ist, dass dort ein Lager angeordnet wird. I

Am ersten Lagerabschnitt 106 wird ein Radiallager 108 angeordnet, wobei das Radiallager 108 hier als Nadellager ausgebildet ist.

Das Radiallager 108 weist hier keinen Innenring auf und die Wälzelemente, d.h. die Nadeln des Radiallagers 108, laufen direkt auf der Oberfläche des ersten Lagerabschnitts 106.

Die angetriebene Schraube 16 weist neben dem Schraubenantriebswellenabschnitt 102 weiter einen Schraubenabschnitt 110 und einen zweiten Lagerabschnitt 112 auf.

Der Schraubenabschnitt 110 ist dabei zwischen dem Schraubenantriebswellenabschnitt 102 und dem zweiten Lagerabschnitt 112 angeordnet.

Im zweiten Lagerabschnitt 112 ist hierein Lager 114 zur Aufnahme radialer und axialer Kräfte angeordnet. Dadurch wird es möglich, mit einem vergleichsweise kleiner bauenden Radial- / Axiallager die auftretenden Kräfte an der angetriebenen Schraube 16 aufnehmen zu können. Auf der zwischen Schraubenabschnitt 110 und der Ausgleichskupplung 104 befindlichen Schraubenantriebswellenabschnitt 102 ist es vollkommen ausreichend, dort lediglich Radialkräfte aufzunehmen.

Eine ausreichende Lagerung der angetriebenen Schraube 16 wird hierdurch möglich.

Es kann dadurch kleiner gebaut werden und es ist nicht mehr erforderlich, vergleichsweise große Lager 114 zur Aufnahme der entstehenden Radialkräfte, wie beispielsweise bei einem Antrieb mit einem Riementrieb oder einer Zahnradstufe vorzusehen.

Die durch die angetriebene Schraube 16 mit dieser kämmenden Schraube 18 weist im Wesentlichen die identische Lageranordnung wie die angetriebene Schraube 16 auf.

Hierdurch wird es ermöglicht, dass die Lagersitze im Gehäuse 20 im Wesentlichen mit identischen Durchmessern ausgebildet werden können. Hierdurch werden die Umrüstzeiten der zu verwendenden Werkzeuge verringert. Auch hier wird vergleichsweise wenig Bauraum benötigt.

### BEZUGSZEICHENLISTE

- 10: Schraubenkompressor
- 12: Befestigungsflansch
- 14: Eingangswelle
- 16: Schrauben
- 18: Schrauben
- 20: Gehäuse
- 22: Öl
- 24: Einlassstutzen
- 26: Luftfilter
- 28: Lufteinlass
- 30: Ventileinsatz
- 32: Luftzuführkanal
- 34: Luftauslassrohr
- 36: Steigleitung
- 38: Temperaturfühler
- 40: Halter für ein Luftentölelement
- 42: Luftentölelement
- 44: Filtersieb bzw. bekannte Filter- bzw. Ölabscheidevorrichtungen
- 46: Luftausgangsöffnung
- 48: Rückschlagventil
- 50: Mindestdruckventil
- 51: Luftauslass
- 52: Steigleitung
- 54: Filter- und Rückschlagventil
- 56: Düse
- 58: Ölrückführleitung
- 59: Ölablassschraube
- 60: Ansatz
- 60a: äußerer Ring
- 60b: innerer Ring
- 62: Ölfilter
- 64: Ölfiltereinlasskanal
- 66: Thermostatventil
- 68: Rückführleitung
- 70: Lager
- 72: Düse
- 74: Kühler, Wärmetauscher
- 76: Sicherheitsventil
- 78: Bypassleitung
- 80: Entlastungsventil
- 82: Öllevelsensor
- 100: Schraubenkompressorsystem
- 102: Schraubenantriebswellenabschnitt
- 104: Ausgleichskupplung
- 106: erster Lagerabschnitt
- 108: Radiallager
- 110: Schraubenabschnitt
- 112: zweiter Lagerabschnitt
- 114: Lager

## Patentansprüche

1. Schraubenkompressorsystem (100) zum Bereitstellen von Druckluft für ein Bremssystem eines Nutzfahrzeugs mit wenigstens einem Schraubenkompressor (10), wenigstens einem Schraubenkompressorantrieb mit einer Abtriebswelle, wenigstens einer angetriebene Schraube (16) mit einem Schraubenantriebswellenabschnitt (102), wobei die Abtriebswelle und der Schraubenantriebswellenabschnitt (102) im Wesentlichen ko-axial sind, wobei der Schraubenkompressorantrieb ein Elektromotor ist und wobei zwischen Abtriebswelle und Schraubenantriebswellenabschnitt eine Ausgleichskupplung (104) vorgesehen ist, wobei der Schraubenantriebswellenabschnitt (102) einen ersten Lagerabschnitt (106) aufweist, an welchem ein Radiallager (108) angeordnet ist, wobei das Radiallager (108) keinen Innenring aufweist.

2. Schraubenkompressorsystem (100) nach Anspruch 1,
**dadurch gekennzeichnet, dass**
das Radiallager (108) als Nadellager ausgebildet ist.

3. Schraubenkompressorsystem (100) nach Anspruch 1 oder 2,
**dadurch gekennzeichnet, dass**
die Wälzelemente des Radiallagers (108) direkt auf der Oberfläche des ersten Lagerabschnittes (106) laufen.

4. Schraubenkompressorsystem (100) nach einem der vorhergehenden Ansprüche,
**dadurch gekennzeichnet, dass**
die angetriebene Schraube (16) neben dem Schraubenantriebswellenabschnitt (102) weiter einen Schraubenabschnitt (110) und einen zweiten Lagerabschnitt (112) aufweist, wobei der Schraubenabschnitt (110) zwischen dem Schraubenantriebswellenabschnitt (102) und dem zweiten Lagerabschnitt (112) befindlich ist.

5. Schraubenkompressorsystem (100) nach Anspruch 4,
**dadurch gekennzeichnet, dass**
am zweiten Lagerabschnitt (112) ein Lager (114) zur Aufnahme axialer und radialer Kräfte angeordnet ist.

6. Schraubenkompressorsystem (100) nach einem der vorhergehenden Ansprüche,
**dadurch gekennzeichnet, dass**
die mit der angetriebenen Schraube (16) kämmende Schraube (18) eine im Wesentlichen identische Lageranordnung wie die angetriebene Schraube (16) aufweist.

## Claims

1. A screw compressor system (100) for the provision of compressed air for a braking system of for a utility vehicle, having at least one screw compressor (10), at least one screw compressor drive with an output shaft, and at least one driven screw (16) with a screw drive shaft portion (102), the output shaft and the screw drive shaft portion (102) being substantially coaxial, the screw compressor drive being an electric motor and a compensating coupling (104) being provided between the output shaft and the screw drive shaft portion (102), the screw drive shaft portion (102) having a first bearing portion (106) on which a radial bearing (108) is arranged, the radial bearing (108) having no inner ring.

2. A screw compressor system (100) according to claim 1,
**characterised in that**
the radial bearing (108) is designed as a needle-roller bearing.

3. A screw compressor system (100) according to claim 1 or 2,
**characterised in that**
the rolling elements of the radial bearing (108) run directly on the surface of the first bearing portion (106).

4. A screw compressor system (100) according to any one of the preceding claims,
**characterised in that**
in addition to the screw drive shaft portion (102), the driven screw (16) also has a screw portion (110) and a second bearing portion (112), the screw portion (110) being located between the screw drive shaft portion (102) and the second bearing portion (112).

5. A screw compressor system (100) according to claim 4,
**characterised in that**
a bearing (114) for absorbing axial and radial forces is arranged on the second bearing portion (112).

6. A screw compressor system (100) according to any one of the preceding claims,
**characterised in that**
the screw (18) that meshes with the driven screw (16) has a substantially identical bearing arrangement to the driven screw (16).

## Revendications

1. Système (100) de compresseur de vis pour disposer d'air comprimé pour un système de frein d'un véhicule utilitaire, comprenant au moins un compresseur (10) de vis, au moins un entraînement de compresseur de vis ayant un arbre mené, au moins une vis (16) entraînée ayant une partie (102) d'arbre d'entraînement de vis, dans lequel l'arbre mené et la partie (102) d'arbre d'entraînement à vis sont sensiblement coaxiaux, dans lequel l'entraînement de compresseur de vis est un moteur électrique et dans lequel entre l'arbre mené et la partie d'arbre d'entraînement de vis est prévu un accouplement (104) de compensation, dans lequel la partie (102) d'arbre d'entraînement de vis a une première partie (106) de palier sur laquelle est monté un palier (108) radial, le palier (108) radial n'ayant pas de bague intérieure.

2. Système (100) de compresseur suivant la revendication 1,
**caractérisé en ce que**
le palier (108) radial est constitué sous la forme d'un palier à aiguille.

3. Système (100) de compresseur suivant la revendication 1 ou 2,
**caractérisé en ce que**
les éléments de roulement du palier (108) radial roulent directement sur la surface de la première partie (106) de palier.

4. Système (100) de compresseur suivant l'une des revendications précédentes,
**caractérisé en ce que**
la vis (16) entraînée a, outre la partie (102) d'arbre d'entraînement de vis, une autre partie (110) de vis et une deuxième partie (112) de palier, dans lequel la partie (110) de vis se trouve entre la partie (102) d'arbre d'entraînement de vis et la deuxième partie (112) de palier.

5. Système (100) de compresseur suivant la revendication 4,
**caractérisé en ce que**
un palier (114) d'absorption de forces axiale et radiale est monté sur la deuxième partie (112) de palier.

6. Système (100) de compresseur suivant l'une des revendications précédentes,
**caractérisé en ce que**
la vis (18) engrènant avec la vis (16) entraînée a un agencement de palier sensiblement pareil à celui de la vis (16) entraînée.
